# EUROPÄISCHE PATENTSCHRIFT

(11) **EP 2 025 569 B1**
(45) Veröffentlichungstag und Bekanntmachung des Hinweises auf die Patenterteilung: **23.11.2016**
(21) Anmeldenummer: 08013393.7
(22) Anmeldetag: 25.07.2008
(51) Int. Cl.: B60T 17/18, B60T 13/68, B60T 8/32

(54) **Hilfsbremsvorrichtung für Nutzfahrzeuge**
Auxiliary brake for commercial vehicles
Dispositif de freinage secondaire pour véhicules utilitaires

(30) Priorität: 14.08.2007 DE 102007038288
(43) Veröffentlichungstag der Anmeldung: 18.02.2009
(73) Patentinhaber: MAN Truck & Bus AG, 80995 München (DE)
(72) Erfinder: Scherle, Alwin, 85229 Markt Indersdorf (DE); Hofstetter, Thomas, 84048 Mainburg (DE); Reiner, Josef, 85258 Weichs/Ebersbach (DE)

(56) Entgegenhaltungen:
- EP-A- 1 464 555
- EP-A- 1 764 276
- EP-A2- 0 357 922
- DE-C1- 19 504 393
- FR-A- 1 604 919
- US-A- 4 919 492
- US-A- 5 425 571

## Beschreibung

Die Erfindung bezieht sich auf eine Druckluftbremsanlage für ein Nutzfahrzeug, deren Vorderradbremszylinder über getrennte Druckluftleitungen mit einem Druckluftbehälter verbunden sind, entsprechend dem Oberbegriff des Anspruchs 1.

Der Gesetzgeber schreibt vor, dass bei einem vollständigen oder teilweisen Ausfall der Bremse eine Hilfsbremse zur Verfügung stehen muss, um bestimmte Verzögerungs- und Bremswerte einzuhalten. Bei Fahrzeugen, die einen hohen Gewichtsanteil auf der Vorderachse haben, kann die Hinterachse bei Ausfall des Vorderachsbremskreises, nicht genügend Bremskraft zur Erreichung der Hilfsbremsfunktion auf die Straße übertragen. Dies ist bedingt durch die relativ geringe Aufstandskraft der Hinterachse im Verhältnis zum Gesamtgewicht und durch die bei der Bremsung entstehende Achslastverteilung auf die Vorderachse. Hauptsächlich betroffen sind abgesattelte Sattelzugmaschinen und LKW-Fahrgestelle ohne Aufbau.

Aus der EP 0 357 922 A2 ist ein Verfahren zum Betrieb einer elektrischen Druckmittel-Betriebsbremseinrichtung bekannt, das eine hohe Zuverlässigkeit und Verfügbarkeit der Einrichtung bewirkt. Das Verfahren stützt sich auf eine vorrangig elektrisch wirkende, individuelle Ansteuerung der einzelnen Radbremsen, welche bei Vorliegen eines Fehlers oder Defekts von einer herkömmlich pneumatisch wirkenden Ansteuerung überspielt oder ersetzt werden kann. Das Verfahren bedient sich mehrerer Signalgeber zur Erfassung wesentlicher Parameter von gebremsten Rädern. Verfahrensgemäß werden mittels programmierter Prüfroutinen in Reaktionszusammenhang stehende Aussagen mehrerer Geber ausgewertet, um so im Verlaufe normalen Bremsbetriebes die Geber und ihre Signalleitungen sowie die elektrischen Ansteuerleitungen zu überwachsen. Die bekannte Vorrichtung zur Durchführung des Verfahrens beinhaltet mehrere parallel und unabhängig voneinander wirkende Sicherungsfunktionen, die eine elektrische Fehlbetätigung der Bremsen unmöglich machen. Die Sicherheit beeinträchtigende Prüfergebnisse sind in einen nichtflüchtigen Halbleiterspeicher einschreibbar, der durch gezielte Schreib-Auslösung im Vorverlaufe einer durch Bremsversagen ausgelösten Gefahrensituation auch als Daten-Logger des Versagens fungieren kann.

Aus der DE 41 36 978 ist eine Druckluftbremsanlage für Fahrzeuge mit einer von Druckluft angesteuerten, ventilbestückten Betriebsbremse auf dem Zugwagen bekannt. Die Betriebsbremse ist mit einer elektro-pneumatischen Bremseinrichtung kombiniert und weist ein elektrisches Steuergerät als Schalt-Zentrale für die Bremsanlage auf. Das Steuergerät ermittelt mit Hilfe von Sensoren Kenndaten, welche als Zustandsfühler die Energiesteuerung der Ventile und die Stellcharakteristik von Bremszylindern überwachen. Nach diesen Kenndaten ist ein definierter, für die Fahrsicherheit ungefährlicher Betriebszustand des Kraftfahrzeuges feststellbar. Im Falle ungefährdeter Fahrsicherheit sind Prüf- und Justierabläufe der Bremsanlage auf Anforderung oder automatisch in Gang setzbar.

Bei Druckluftbremsanlagen aus dem Stand der Technik wäre es jedoch wünschenswert, dass eine Bremse auch bei Druckverlust durch eine Leckage in der Druckluftleitung noch bremsfähig bliebe.

Es ist daher Aufgabe der Erfindung, eine Druckluftbremsanlage für ein Nutzfahrzeug zu schaffen, die entsprechend der Aufgabenstellung optimiert ist.

Die Aufgabe wird erfindungsgemäß durch die Merkmale des Anspruchs 1 gelöst.

Die Druckluftversorgung der Vorderachs-Radbremszylinder wird mit Hilfe eines Ventils in zwei getrennte Druckluftleitungen aufgeteilt, die den Vorderachs-Radbremszylindern den erforderlichen Bremsdruck zuführen. Im Falle einer Leckage bleibt die nicht betroffene Druckluftleitung funktionsfähig.

Vorteilhafterweise kann die erfindungsgemäße Druckluftbremsanlage nach Betätigung des Fußbremsventils unter Zwischenschaltung des Steuergeräts elektronisch oder pneumatisch angesteuert werden. Die Ansteuerung des Bremsdrucks der Vorderräder erfolgt über die Radbremsmodule. Diese werden an die getrennten Druckluftleitungen angeschlossen. Die Ansteuerung des Bremsdrucks kann auch über das Fußbremsmodul erfolgen. Das Fußbremsmodul verfügt zur Druckluftversorgung der Radbremszylinder über jeweils getrennte Ein- und Ausgänge. Es ist denkbar, in den Druckluftleitungen Rückschlagventile anzuordnen. Erfindungsgemäß lässt ein Sperrventil bis zu einem bestimmten Druck ein Überströmen in die jeweils andere Druckluftleitung zu. Dadurch findet zwischen den vom Hinterachs-Druckluftbremsbehälter und den vom Vorderachs-Druckluftbehälter versorgten Druckluftleitung bis zu einem eingestellten Druck ein Druckausgleich statt. Fällt in einer Druckluftleitung der Druck durch Undichtigkeit oder Leitungsbruch ab, so verbleibt in der anderen Druckluftleitung noch ein Restdruck, der zur Erreichung der Hilfsbremswirkung ausreicht. Denkbar ist auch, in die getrennten Druckluftleitungen jeweils ein Überströmventil mit voller Rückströmung sowie einen weiteren Druckluftbehälter einzubauen. Das Mehrkreisschutzventil ist so konzipiert, dass der Zufluss der Druckluft ohne Begrenzung erfolgt, dass aber ein Rückstrom nur bis zu einem bestimmten Druck möglich ist. Möglich ist, als Mehrkreisschutzventil ein Umsteuerventil einzusetzen. Dadurch bleibt in der von einer Störung nicht betroffenen Druckluftleitung weiterhin in ausreichendem Maße Druckluft erhalten, die für eine Hilfsbremswirkung ausreicht.

Das Steuergerät erhält vom Fußbremsmodul ein Signal, das vom Fahrzeuglenker durch Betätigung der Fußbremse ausgelöst wird und die Intensität des Bremswunsches zum Ausdruck bringt. Je nach Intensität des Bremswunsches setzt das Steuergerät einen entsprechenden Bremsdruck in den Druckluftleitungen frei. In Abhängigkeit der Beladung des Nutzfahrzeugs oder des Schlupfwertes, der an den zu bremsenden Vorderrädern durch Sensoren ermittelt wird übermittelt das Steuergerät den Bremsdruck an die Vorderachs-Radbremszylinder. Sind in der Druckluftbremsanlage Vorderachs-Radbremszylinder vorgesehen, so teilen sie in Abhängigkeit der Beladung bzw. der jeweiligen Schlupfwerte der Vorderachs-Radbremszylinder den Bremsdruck in gleichem bzw. ungleichem Verhältnis zu. Bei Druckabfall unter einen vorher zu bestimmenden Druck z.B. auf Grund einer undichten Druckluftleitung unterbricht das mindestens eine Mehrkreisschutzventil, das in wenigstens einer der Druckluftleitungen angeordnet ist die Verbindungsleitung zum Hinterachs-Druckluftbehälter. Die erfindungsgemäße Druckluftbremsanlage ist auch auf eine zweite lenkbare Vorderachse anwendbar.

Nach einer anderen Ausführungsform der Erfindung ist dem Steuergerät ein Fußbremsmodul vorgeschaltet. Das Fußbremsmodul überträgt den Bremswunsch des Fahrers z.B. in Abhängigkeit eines Bremspedalweggebers, der die Intensität des Bremswunsches in ein Signal an das Steuergerät umwandelt.

Nach einer anderen Ausführungsform der Erfindung ist das Steuergerät in das Fußbremsmodul integriert.

Nach einer anderen Ausführungsform der Erfindung ist dem Steuergerät in den Druckluftleitungen zu den Bremszylindern je ein Radbremsmodul nachgeschaltet. Hierdurch kann die Länge der Druckluftleitungen zwischen den Radbremsmodulen und den Bremszylindern erheblich verkürzt werden. Die Ansprechzeit der Bremse wird verkürzt und die Schwellzeit bis zum Aufbau des erforderlichen Bremsdrucks im Vorderachs-Radbremszylinder entsprechend verringert. Die Radbremsmodule dienen der Modulation des Bremsdrucks auf die jeweiligen Vorderachs-Radbremszylinder.

Nach einer anderen Ausführungsform der Erfindung ist dem Steuergerät nachgeschaltet, in den Druckluftleitungen ein gemeinsames Radbremsmodul angeordnet. Diese Ausführungsform ist zur Kostenreduzierung für kleinere und leichtere Fahrzeuge vorgesehen.

Nach einer anderen Ausführungsform der Erfindung sind die Druckluftleitungen über ein Wechselventil mit dem gemeinsamen Radbremsmodul verbunden. Als Wechselventil kann z.B. ein Zwei-Wege-Ventil zum Einsatz kommen. Das Radbremsmodul kann mit einem Rückschlagventil in eine einkanalige Vorderachse integriert werden.

Nach einer anderen Ausführungsform der Erfindung ist jede Druckluftleitung über einen separaten Eingang mit dem gemeinsamen Radbremsmodul verbunden. Die Druckluft wird dabei über ein gemeinsames Radbremsmodul einheitlich auf die Radbremszylinder der Vorderachse verteilt.

Nach einer anderen Ausführungsform der Erfindung sind die Radbremsmodule elektronisch ansteuerbar, gleichzeitig ist aber auch eine pneumatische Ansteuerung der Radbremsmodule denkbar. Die Radbremsmodule werden grundsätzlich elektronisch angesteuert. Bei Ausfall der elektronischen Ansteuerung ist aus Sicherheitsgründen eine zweite pneumatische Ansteuerung vorgesehen.

Nach einer anderen Ausführungsform der Erfindung ist in dem/den Radbremsmodul/en je ein Rückschlagventil integriert. Die Integrierung des Rückschlagventils ermöglicht die Einsparung weiterer Ventile, was zu einer Senkung der Herstellungskosten beiträgt.

Nach einer anderen Ausführungsform der Erfindung ist dem Fußbremsmodul je Druckluftleitung ein Rückschlagventil vorgeschaltet.

Nach einer anderen Ausführungsform der Erfindung ist in der mit dem Sperrventil versehenen Druckluftleitung ein weiterer Druckluftbehälter angeordnet. Hierdurch kann, zusätzlich zur wahlweisen Zuschaltung des Hinterachs-Druckluftbehälters der Bremsdruck an der undichten Druckluftleitung der Vorderachse konstant gehalten bzw. erhöht werden.

Nach einer anderen Ausführungsform der Erfindung ist das Sperrventil in das Mehrkreisschutzventil integriert.

Nach einer anderen Ausführungsform der Erfindung weist eine Druckluftleitung ein weiteres Sperrventil auf. Hierdurch wird eine exaktere Dosierung des nach dem Druckabfall verbleibenden Bremsdruckes ermöglicht.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen jeweils in schematischer Darstellung:
Fig. 1 Die erfindungsgemäße Druckluftbremsanlage, bei der der Bremsdruck über Radbremsmodule angesteuert wird,
Fig. 2 Die Druckluftbremsanlage nach Fig. 1 mit zusätzlichem Sperrventil und weiterem Druckluftbehälter,
Fig. 3 eine Druckluftbremsanlage nach Fig. 1 mit einem in das Mehrkreisschutzventil integrierten Sperrventil,
Fig. 4 eine Druckluftbremsanlage nach Fig. 1 mit nur einem Radbremsmodul,
Fig. 5 eine Druckluftbremsanlage nach Fig. 4 mit separaten Ein- und Ausgängen in das Radbremsmodul,
Fig. 6 eine Druckluftbremsanlage nach Fig. 5 mit separaten Ein- und Ausgängen in das Fußbremsmodul,
Fig. 7 eine Druckluftbremsanlage gemäß der Erfindung, bei der der Bremsdruck über ein Fußbremsmodul angesteuert wird,
Fig. 8 eine Druckluftbremsanlage nach Fig. 7 mit einem zusätzlichen Sperrventil und einem weiteren Druckluftbehälter,
Fig. 9 eine Druckluftbremsanlage nach Fig. 7 mit hydraulischer Ansteuerung der Radbremsmodule,
Fig. 10 eine Druckluftbremsanlage nach Fig. 7 mit einem in das Mehrkreisschutzventil integrierten Sperrventil,
Fig. 11 eine Druckluftbremsanlage nach Fig. 7 mit einem einzigen Radbremsmodul,
Fig. 12 eine Druckluftbremsanlage nach Fig. 7 mit integriertem Rückschlagventil,
Fig. 13 eine Druckluftbremsanlage gemäß der Erfindung mit einem Rückschlagventil je Druckluftleitung,
Fig. 14 eine Druckluftbremsanlage nach Fig. 14 mit einem zusätzlichen Sperrventil,
Fig. 15 eine Druckluftbremsanlage nach Fig. 13 mit einem zusätzlichen Sperrventil und einem weiteren Druckluftbehälter und
Fig. 16 eine Druckluftbremsanlage entsprechend Fig. 15 mit einem in das Mehrkreisschutzventil integrierten Sperrventil.

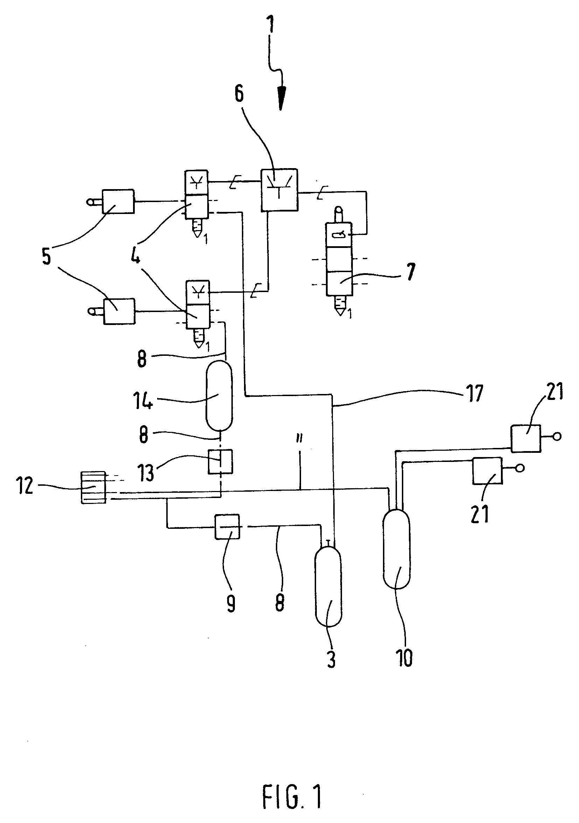

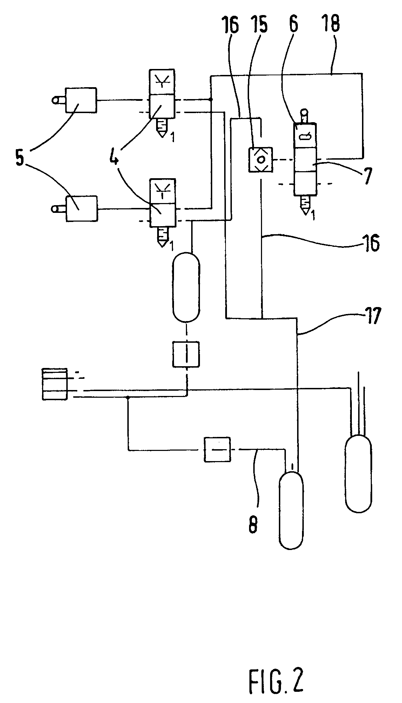

Fig. 1 zeigt eine Druckluftbremsanlage 1 mit zwei getrennten Druckluftleitungen 8 bzw. 17, die einen Vorderachs-Druckluftbehälter 3 mit den Vorderachs-Radbremszylinder 5 verbinden. Mit Bezugsziffer 6 ist ein Steuergerät gezeigt, dem auf elektronischem Weg der Bremswunsch vom Fußbremsmodul 7 signalisiert wird. Das Steuergerät 6 übermittelt auf elektronischem Weg ein Bremssignal an die Radbremsmodule 4. Die Radbremsmodule 4 sind dabei in Fig. 1 dem Steuergerät 6 nachgeschaltet und in den Druckluftleitungen 8 bzw. 17 angeordnet. Die Druckluftleitung 8 verbindet den Vorderachs-Druckluftbehälter 3 mit dem linken Vorderachs-Radbremszylinder 5. In der Druckluftleitung 8 sind hintereinander vom Vorderachs-Druckluftbehälter 3 aus gesehen zwei Sperrventile 9; 13 angeordnet. Zwischen beiden zeigt Fig. 1 ein Mehrkreisschutzventil 12, über das bei Druckabfall die Verbindungsleitung 11 zu einem Hinterachs-Druckluftbehälter 10 von der Druckluftleitung 8 abgekoppelt wird. Zwischen dem dem Mehrkreisschutzventil 12 nachgeschalteten weiteren Sperrventil 13 und dem Radbremsmodul 4 ist ein weiterer Druckluftbehälter 14 angeordnet. Beispielgebend für die Fig. 2 - 16 sind in Fig. 1 die an den Hinterachs-Druckluftbehälter 10 angeschlossenen Hinterachs-Radbremszylinder 21 dargestellt.

In Fig. 2 ist das Steuergerät 6 in das Fußbremsmodul 7 integriert. Das hydraulische Fußbremsmodul 7 ist über ein Wechselventil 15 mit den Druckluftleitungen 8; 17 verbunden. Das Wechselventil 15 ist dabei über die Zuleitungen 16 an den Druckluftleitungen 8 bzw. 17 angeschlossen. Die Anbindung des Fußbremsmoduls 7 an die Radbremsmodule 4 erfolgt über die Zuführungsleitungen 18.

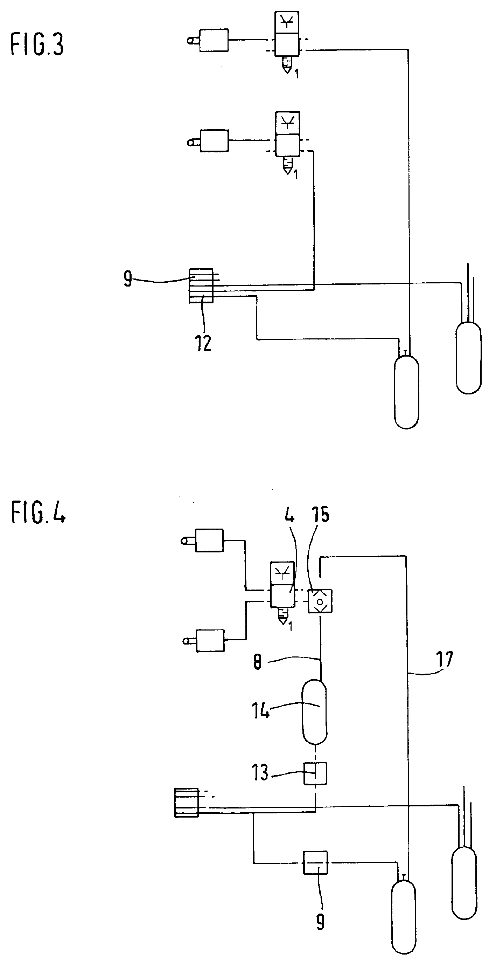

Fig. 3 unterscheidet sich von Fig. 1 darin, dass das Sperrventil 9 in das Mehrkreisschutzventil 12 integriert ist.

Fig. 4 weist gegenüber der Fig. 1 nur ein Radbremsmodul 4 auf, das über ein Wechselventil 15 mit den Druckluftleitungen 8 bzw. 17 verbunden ist.

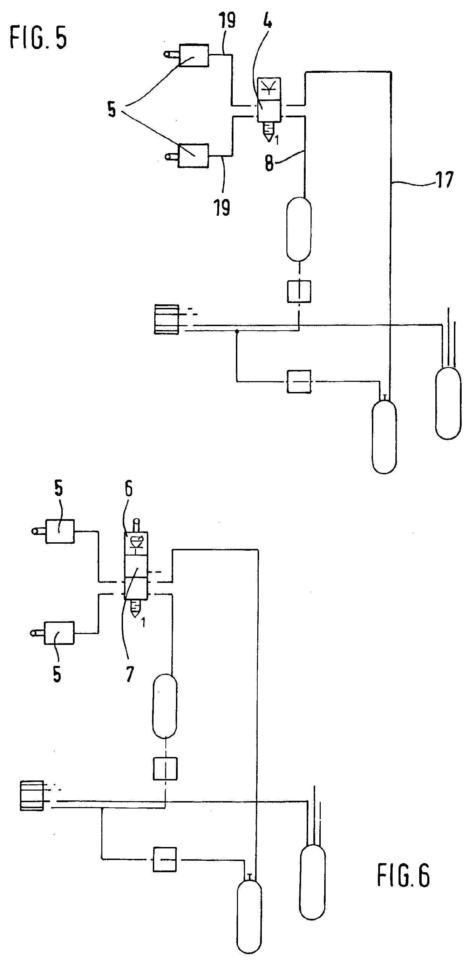

Fig. 5 entspricht prinzipiell der Darstellung aus Fig. 4, jedoch mit dem Unterschied, dass statt eines Wechselventils 15 jede Druckluftleitung 8 bzw. 17 einen getrennten Eingang in das eine Radbremsmodul 4 aufweist. Entsprechend Fig. 4 sind die jeweiligen Vorderachs-Radbremszylinder 5 zur Zusteuerung des Bremsdrucks über Leitungen 19 mit dem einen Radbremsmodul 4 verbunden.

Fig. 6 zeigt vergleichbar mit den vorhergehenden Ausführungsformen, mit Ausnahme der Fig. 2, eine Signal-Ansteuerung der Vorderachs-Radbremszylinder 5 ohne Verwendung von Radbremsmodulen 4. Das Steuergerät 6 ist in Fig. 6 in das Fußbremsmodul 7 integriert. Anstatt über Radbremsmodule 4 wird in Fig. 6 die Bremsdruckmodulation über ein einziges Fußbremsmodul 7 bewirkt.

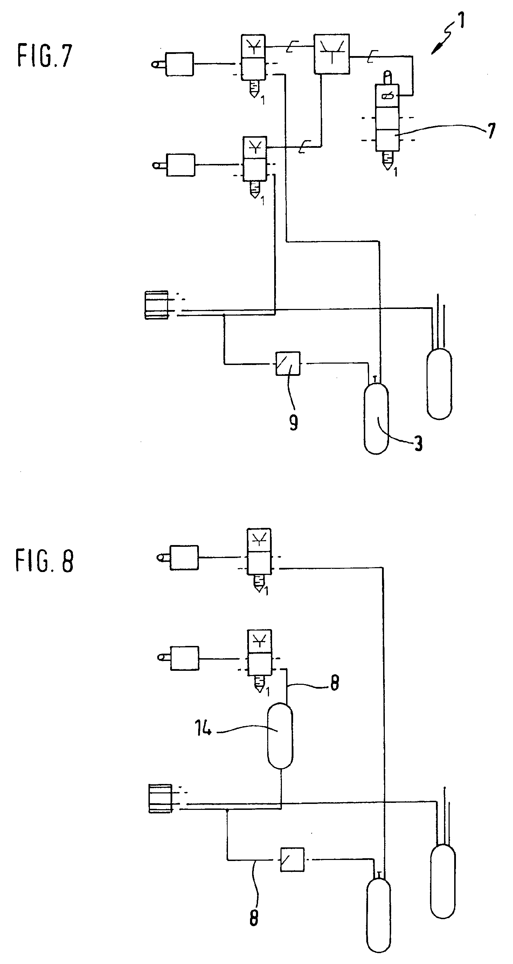

Fig. 7 zeigt eine erfindungsgemäße Druckluftbremsanlage 1, bei der der Bremsdruck elektronisch über das Fußbremsmodul 7 angesteuert wird. Fig. 7 ist vergleichbar mit Fig. 1, allerdings weist Fig. 7 lediglich einen Vorderachs-Druckluftbehälter 3 und nur ein einziges Sperrventil 9 auf.

Fig. 8 leitet sich von Fig. 7 ab, mit dem Unterschied, dass die Druckluftleitung 8 einen weiteren Druckluftbehälter 14 besitzt.

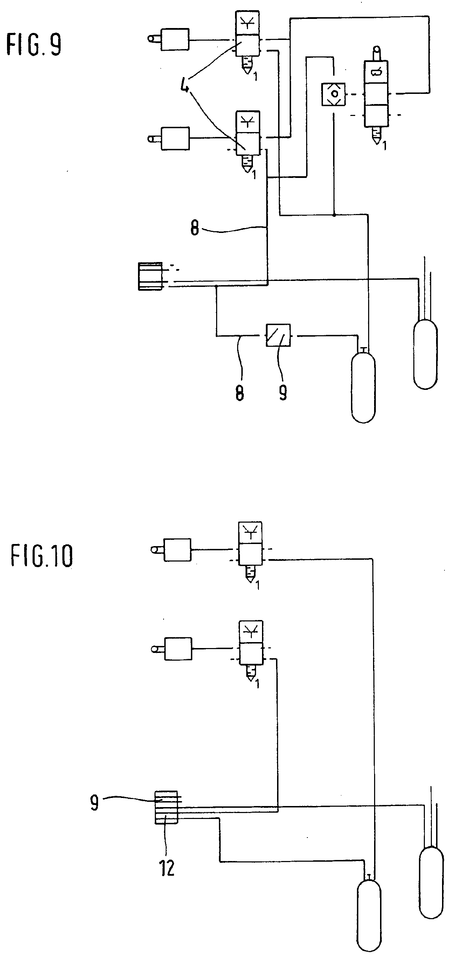

Fig. 9 zeigt eine Bremsdruckansteuerung der Radbremsmodule 4 entsprechend der vorstehenden Fig. 2. Der Unterschied besteht jedoch darin, dass in der Druckluftleitung 8 nur ein einziges Sperrventil 9 angeordnet ist und der weitere Druckluftbehälter 14 fehlt.

Fig. 10 entspricht der in Fig. 7 gezeigten Ausführungsform mit dem Unterschied, dass in das Mehrkreisschutzventil 12 das Sperrventil 9 integriert ist.

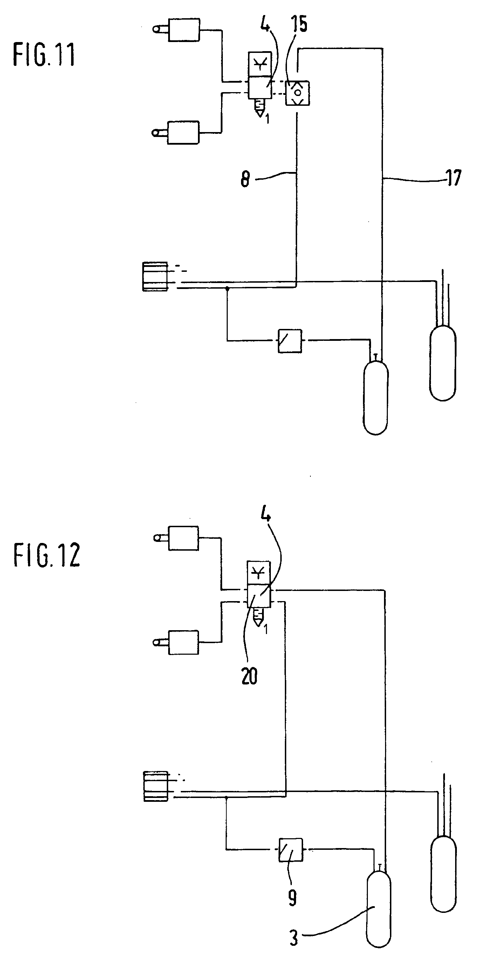

Fig. 11 entspricht der Fig. 4, allerdings fehlen das weitere Sperrventil 13 und der zusätzliche Druckluftbehälter 14, die in Fig. 4 dargestellt sind.

Fig. 12 leitet sich aus Fig. 7 ab und entspricht darüber hinaus der Darstellung der Fig. 5 mit dem Unterschied, dass in Fig. 12 nur jeweils ein Sperrventil 9 und ein Vorderachs-Druckluftbehälter 3 dargestellt sind. Sowohl in Fig. 5 als auch in Fig. 12 ist in das einzige Radbremsmodul 4 ein Rückschlagventil 20 integriert.

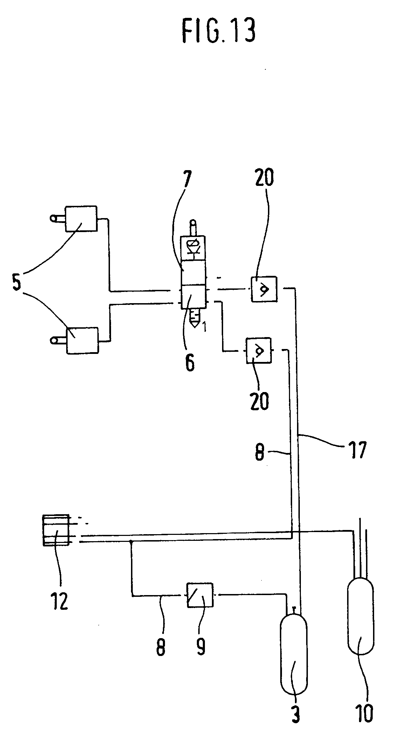

Fig. 13 zeigt eine Ausführungsvariante, in der der Vorderachs-Druckluftbehälter 3 mit je einer Druckluftleitung 8 und 17 über getrennte Eingänge mit einem Fußbremsmodul 7 verbunden ist. In der Druckluftleitung 8 ist ein Sperrventil 9 angeordnet. Für die Zuschaltung des Hinterachs-Druckluftbehälters 10 bei Druckabfall ist in der Druckluftleitung 8 das Mehrkreisschutzventil 12 vorgesehen. Dem Fußbremsmodul 7, ist in beiden Druckluftleitungen 8 und 17 je ein Rückschlagventil 20 vorgeschaltet. In das Fußbremsmodul 7 ist ein Steuergerät 6 integriert.

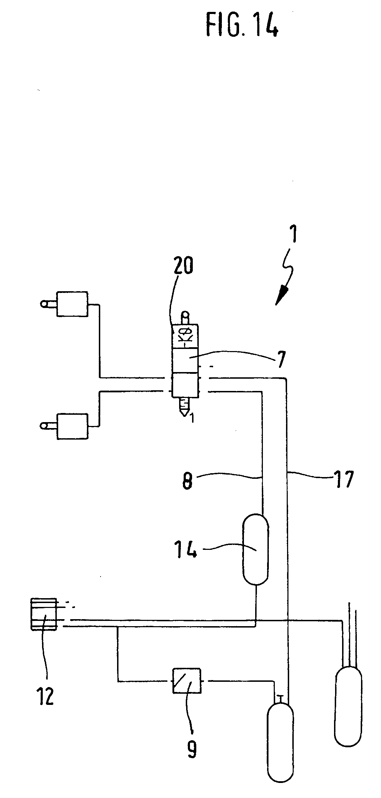

Fig. 14 zeigt die Anordnung einer Druckluftbremsanlage 1 entsprechend Fig. 13 mit dem Unterschied, dass in der Druckluftleitung 8 dem Mehrkreisschutzventil 12 ein weiterer Druckluftbehälter 14 nachgeschaltet ist. Das Fußbremsmodul 7 enthält in Fig. 14 ein integriertes Rückschlagventil 20.

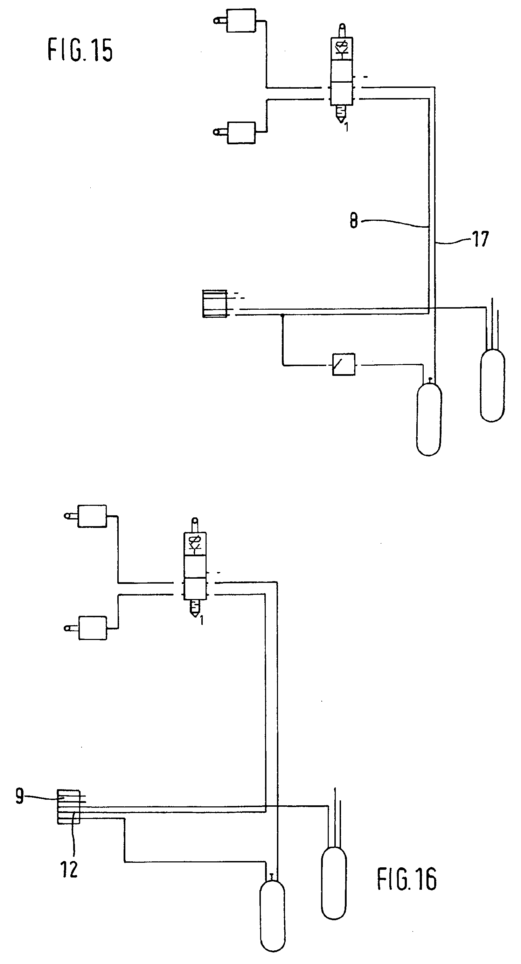

Fig. 15 entspricht Fig. 14 mit dem Unterschied, dass die Druckluftleitung 8 keinen weiteren Druckluftbehälter 14 aufweist.

Fig. 16 entspricht Fig. 15, wobei in das Mehrkreisschutzventil 12 ein Sperrventil 9 integriert ist.

### Bezugsziffern:

- 1: Druckluftbremsanlage
- 3: Vorderachs-Druckluftbehälter
- 4: Radbremsmodul
- 5: Vorderachs-Radbremszylinder
- 6: Steuergerät
- 7: Fußbremsmodul
- 8: Druckluftleitung / links
- 9: Sperrventil
- 10: Hinterachs-Druckluftbehälter
- 11: Verbindungsleitung
- 12: Mehrkreisschutzventil
- 13: Sperrventil (weiteres)
- 14: Druckluftbehälter (weiterer)
- 15: Wechselventil
- 16: Zuleitung
- 17: Druckluftleitung / rechts
- 18: Zuführungsleitung
- 19: Leitung
- 20: Rückschlagventil
- 21: Hinterachs -Radbremszylinder

## Patentansprüche

1. Druckluftbremsanlage (1) für ein Nutzfahrzeug, deren Vorderachs-Radbremszylinder (5) über getrennte Druckluftleitungen (8;17) mit einem Vorderachs-Druckluftbehälter (3) verbunden sind und die ein von einem Fußbremsmodul (7) betätigtes Steuergerät (6) aufweist, das den Bremsdruck in Abhängigkeit der Beladung des Nutzfahrzeugs auf die Vorderachs-Radbremszylinder (5) und Hinterachse-Radbremszylinder (21) aufteilt, wobei eine der Druckluftleitungen (8; 17) wenigstens ein auf Druckabfall reagierendes Sperrventil (9) und ein Mehrkreisschutzventil (12) aufweist, und wobei das Mehrkreisschutzventil (12) über eine Verbindungsleitung (11) ein ausgeglichenes Bremsdruck-Niveau zwischen dem Vorderachs-Druckluftbehälter (3) und einem Hinterachs-Druckluftbehälter (10) gewährleistet und bei Druckabfall die Druckluftversorgung in den Druckluftleitungen (8;17) in der Weise regelt, so dass die Druckluftversorgung der intakten Druckluftleitungen (8; 17) gewährleistet bleibt.

2. Druckluftbremsanlage (1) nach Anspruch 1, **dadurch gekennzeichnet, dass** dem Steuergerät (6) das Fußbremsmodul (7) vorgeschaltet ist.

3. Druckluftbremsanlage (1) nach Anspruch 2, **dadurch gekennzeichnet, dass** das Steuergerät (6) in das Fußbremsmodul (7) integriert ist.

4. Druckluftbremsanlage (1) nach Anspruch 1, **dadurch gekennzeichnet, dass** dem Steuergerät (6) nachgeschaltet, in den Druckluftleitungen (8; 17) zu den Vorderachs-Radbremszylinder (5) je ein Radbremsmodul (4) angeordnet ist.

5. Druckluftbremsanlage (1) nach Anspruch 1, **dadurch gekennzeichnet, dass** dem Steuergerät (6) nachgeschaltet, den Druckluftleitungen (8; 17) ein gemeinsames Radbremsmodul (4) zugeordnet ist.

6. Druckluftbremsanlage (1) nach Anspruch 5, **dadurch gekennzeichnet, dass** die Druckluftleitungen (8; 17) über ein Wechselventil (15) mit dem gemeinsamen Radbremsmodul (4) verbunden sind.

7. Druckluftbremsanlage (1) nach Anspruch 5, **dadurch gekennzeichnet, dass** jede Druckluftleitung (8; 17) über einen separaten Eingang mit dem gemeinsamen Radbremsmodul (4) verbunden ist.

8. Druckluftbremsanlage (1) nach Anspruch 1, **dadurch gekennzeichnet, dass** die Radbremsmodule (4) eine elektronische Ansteuerung aufweisen.

9. Druckluftbremsanlage (1) nach einem oder mehreren der vorangegangenen Ansprüche 4 bis 8, **dadurch gekennzeichnet, dass** die Radbremsmodule (4) eine pneumatische Ansteuerung aufweisen.

10. Druckluftbremsanlage (1) nach einem oder mehreren der vorangegangenen Ansprüche 4 bis 9, **dadurch gekennzeichnet, dass** in dem/ den Radbremsmodul /en (4) je ein Rückschlagventil (20) integriert ist.

11. Druckluftbremsanlage (1) nach Anspruch 1, **dadurch gekennzeichnet, dass** dem Fußbremsmodul (7) je Druckluftleitung (8; 17) ein Rückschlagventil (20) vorgeschaltet ist.

12. Druckluftbremsanlage (1) nach Anspruch 1, **dadurch gekennzeichnet, dass** in der mit dem Sperrventil (9) versehenen Druckluftleitung (8; 17) ein weiterer Druckluftbehälter (14) angeordnet ist.

13. Druckluftbremsanlage (1) nach Anspruch 1, **dadurch gekennzeichnet, dass** das Sperrventil (9) in das Mehrkreisschutzventil (12) integriert ist.

14. Druckluftbremsanlage (1) nach Anspruch 1, **dadurch gekennzeichnet, dass** eine Druckluftleitung (8; 17) ein weiteres Sperrventil (13) aufweist.

## Claims

1. A compressed air brake system (1) for a commercial vehicle, the front axle wheel brake cylinders (5) of which are connected via separate compressed air lines (8; 17) to a front axle compressed air reservoir (3), and which compressed air brake system (1) has a control unit (6) which is actuated by a foot brake module (7) and distributes the brake pressure to the front axle wheel brake cylinders (5) and rear axle wheel brake cylinders (21) in a manner which is dependent on the loading of the commercial vehicle, one of the compressed air lines (8; 17) having at least one shut-off valve (9) which reacts to a pressure drop and a multiple circuit protection valve (12), and the multiple circuit protection valve (12) ensuring an equalized brake pressure level between the front axle compressed air reservoir (3) and a rear axle compressed air reservoir (10) via a connecting line (11) and, in the case of a pressure drop, regulating the compressed air supply in the compressed air lines (8; 17) in such a way that the compressed air supply of the intact compressed air lines (8; 17) remains ensured.

2. The compressed air brake system (1) according to Claim 1, **characterized in that** the brake module (7) is connected upstream of the control unit (6).

3. The compressed air brake system (1) according to Claim 2, **characterized in that** the control unit (6) is integrated into the foot brake module (7).

4. The compressed air brake system (1) according to Claim 1, **characterized in that**, connected downstream of the control unit (6), in each case one wheel brake module (4) is arranged in the compressed air lines (8; 17) to the front axle wheel brake cylinders (5).

5. The compressed air brake system (1) according to Claim 1, **characterized in that**, connected downstream of the control unit (6), a common wheel brake module (4) is assigned to the compressed air lines (8; 17).

6. The compressed air brake system (1) according to Claim 5, **characterized in that** the compressed air lines (8; 17) are connected to the common wheel brake module (4) via a shuttle valve (15).

7. The compressed air brake system (1) according to Claim 5, **characterized in that** each compressed air line (8; 17) is connected to the common wheel brake module (4) via a separate inlet.

8. The compressed air brake system (1) according to Claim 1, **characterized in that** the wheel brake modules (4) have an electronic actuating means.

9. The compressed air brake system (1) according to one or more of the preceding Claims 4 to 8, **characterized in that** the wheel brake modules (4) have a pneumatic actuating means.

10. The compressed air brake system (1) according to one or more of the preceding Claims 4 to 9, **characterized in that** in each case one check valve (20) is integrated into the wheel brake module/modules (4).

11. The compressed air brake system (1) according to Claim 1, **characterized in that** one check valve (20) per compressed air line (8; 17) is connected upstream of the foot brake module (7).

12. The compressed air brake system (1) according to Claim 1, **characterized in that** a further compressed air reservoir (14) is arranged in the compressed air line (8; 17) which is provided with the shut-off valve (9).

13. The compressed air brake system (1) according to Claim 1, **characterized in that** the shut-off valve (9) is integrated into the multiple circuit protection valve (12).

14. The compressed air brake system (1) according to Claim 1, **characterized in that** a compressed air line (8; 17) has a further shut-off valve (13).

## Revendications

1. Installation (1) de freinage à air comprimé pour véhicule utilitaire, dont les cylindres (5) de frein de roue de l'essieu avant sont reliés à un récipient (3) d'air comprimé d'essieu avant par l'intermédiaire de conduits (8; 17) séparés d'air comprimé et qui présente un appareil de commande (6) actionné par un module (7) de pédale de frein qui répartit la pression de freinage entre les cylindres (5) des freins de roues de l'essieu avant et les cylindres (21) des freins de roues de l'essieu arrière en fonction de la charge du véhicule utilitaire,
l'un des conduits (8; 17) d'air comprimé présentant au moins une soupape de blocage (9) qui réagit à une chute de pression et une soupape (12) de protection de plusieurs circuits, la soupape (12) de protection de plusieurs circuits qui garantit par l'intermédiaire d'un conduit de liaison (11) l'équilibre entre les niveaux de pression de freinage entre le récipient (3) d'air comprimé de l'essieu avant et un récipient (10) d'air comprimé de l'essieu arrière et qui, en cas de chute de pression, régule l'alimentation en air comprimé dans les conduits (8; 17) d'air comprimé de telle sorte que l'alimentation en air comprimé des conduits (8; 17) d'air comprimé intacts reste garantie.

2. Installation (1) de freinage à air comprimé selon la revendication 1, **caractérisée en ce qu'**un module (7) de pédale de frein est raccordé en amont de l'appareil de commande (6).

3. Installation (1) de freinage à air comprimé selon la revendication 2, **caractérisée en ce que** l'appareil de commande (6) est intégré dans le module (7) de pédale de frein.

4. Installation (1) de freinage à air comprimé selon la revendication 1, **caractérisée en ce qu'**un module (4) de frein de roue est disposé en aval de l'appareil de commande (6) dans chacun des conduits (8; 17) d'air comprimé conduisant aux cylindres (5) des freins de roue de l'essieu avant.

5. Installation (1) de freinage à air comprimé selon la revendication 1, **caractérisée en ce qu'**un module (4) de frein de roue commun prévu en aval de l'appareil de commande (6) est associé aux conduits (8; 17) d'air comprimé.

6. Installation (1) de freinage à air comprimé selon la revendication 5, **caractérisée en ce que** les conduits (8; 17) d'air comprimé sont reliés au module commun (4) de frein de roue par l'intermédiaire d'une soupape de commutation (15).

7. Installation (1) de freinage à air comprimé selon la revendication 5, **caractérisée en ce que** chaque conduit (8; 17) d'air comprimé est relié au module commun (4) de frein de roue par l'intermédiaire d'une entrée séparée.

8. Installation (1) de freinage à air comprimé selon la revendication 1, **caractérisée en ce que** les modules (4) de frein de roue présentent une commande électronique.

9. Installation (1) de freinage à air comprimé selon l'une ou plusieurs des revendications 4 à 8 qui précèdent, **caractérisée en ce que** les modules (4) de frein de roue présentent une commande pneumatique.

10. Installation (1) de freinage à air comprimé selon l'une ou plusieurs des revendications 4 à 9 qui précèdent, **caractérisée en ce qu'**une soupape anti-retour (20) est intégrée dans le ou les modules (4) de frein de roue.

11. Installation (1) de freinage à air comprimé selon la revendication 1, **caractérisée en ce qu'**une soupape anti-retour (20) est prévue en amont du module (7) de pédale de frein pour chaque conduit (8; 17) d'air comprimé.

12. Installation (1) de freinage à air comprimé selon la revendication 1, **caractérisée en ce qu'**un autre récipient (14) à air comprimé est disposé dans le conduit (8; 17) d'air comprimé doté de la soupape de blocage (9).

13. Installation (1) de freinage à air comprimé selon la revendication 1, **caractérisée en ce que** la soupape de blocage (9) est intégrée dans une soupape (12) de protection de plusieurs circuits.

14. Installation (1) de freinage à air comprimé selon la revendication 1, **caractérisée en ce qu'**un conduit (8; 17) d'air comprimé présente une autre soupape de blocage (13).
